# Europäisches Patentamt

## European Patent Office

## Office européen des brevets

(11) Veröffentlichungsnummer: **0 269 803**
**A2**

(12) **EUROPÄISCHE PATENTANMELDUNG**

(21) Anmeldenummer: **87113875.6**

(22) Anmeldetag: **23.09.87**

(51) Int. Cl.4: **H04Q 11/04**

(30) Priorität: **05.12.86 DE 3641561**
**23.06.87 DE 3720644**

(43) Veröffentlichungstag der Anmeldung:
**08.06.88 Patentblatt 88/23**

(84) Benannte Vertragsstaaten:
**FR GB IT**

(71) Anmelder: **ANT Nachrichtentechnik GmbH**
**Gerberstrasse 33**
**D-7150 Backnang(DE)**

(72) Erfinder: **Grassmann, Wolfgang, Dipl.-Ing.**
**Im Wiesengrund 16**
**D-7150 Backnang(DE)**
Erfinder: **Berner, Walter, Dipl.-Ing.**
**Leutenbacher Str. 45**
**D-7057 Leutenbach 3(DE)**
Erfinder: **Müller, Günter, Dr.-Ing.**
**Schmiedbühl 7**
**D-7155 Oppenweiler(DE)**

(54) **Schaltungsanordnung zur Vermittlung von PCM-Kanälen.**

(57) Die Erfindung betrifft eine Schaltungsanordnung zur Vermittlung von PCM-Kanälen im Basisband, wobei die an n Eingangsports ankommenden seriellen zu vermittelnden Daten blockweise parallelgewandelt, in einem Speicher zwischengespeichert und nach dem Auslesen wieder serialisiert n Ausgangsports, die jeweils einer oder mehreren Zieladressen zugeordnet sind, zugeführt werden, und ist dadurch gekennzeichnet, daß eine erste Zwischenspeicherung der parallelisierten Datenblöcke in n den n Eingangsports zugeordneten Eingangsregistern R erfolgt, daß anschließend eine zweite Zwischenspeicherung in einem RAM-Speicher derart erfolgt, daß die Datenblöcke nacheinander entsprechend ihrer Eingangsreihenfolge unter einer Speicheradresse, die sequentiell hochgezählt wird (Inkrementbildung), eingeschrieben werden oder daß anschließend eine zweite Zwischenspeicherung in einem RAM-Speicher derart erfolgt, daß die Datenblöcke nacheinander unter einer Speicheradresse, die gleich der jeweiligen Zieladresse ist, eingeschrieben werden und daß die Datenblöcke nach Maßgabe der in der Zieladresse enthaltenen oder der Zieladresse zugeordneten Nummer des Ausgangsports bzw. der Zeitlage ausgelesen und wiederum in n Ausgangsregistern R zwischengespeichert werden, die jeweils den n Ausgangsports zugeordnet sind.

FIG. 1

## Schaltungsanordnung zur Vermittlung von PCM-Kanälen

Die Erfindung bezieht sich auf eine Schaltungsanordnung zur Vermittlung von PCM-Kanälen im Basisband gemäß Oberbegriff des Anspruches 1.

Eine solche Schaltungsanordnung ist bekannt geworden durch den Aufsatz "Baseband Switches and Transmultiplexers for use in an On-Board Processing Mobile/Business Satellite System" von Evans et al, ICDSC 7, Seiten 587 bis 592 sowie durch ESA, study of a Satellite Communication System for Wideband Communications (Executive Summary), Contrat Estec No. 4931/81/NL/GM (SC).

Die in der Literatur dargestellten Lösungen sind zum Teil so nicht realisierbar und zum Teil sehr aufwendig, wobei ein Steuerrechner erforderlich ist.

Der Erfindung lag die Aufgabe zugrunde, eine Schaltungsanordnung der eingangs genannten Art anzugeben, welche eine unaufwendige Steuerung aufweist.

Die Lösung dieser Aufgabe erfolgt durch die kennzeichnenden Merkmale des Anspruches 1 oder 2.

Die erfindungsgemäße Schaltungsanordnung weist die Vorteile auf, daß sie lediglich eine aufwandsarme Steuerung benötigt, daß sie einen hohen Datendurchsatz gewährt, daß sie modular erweiterbar ist, daß sie hoch zuverlässig zu arbeiten im Stande ist, daß sie leistungsarm ist, daß sie hoch integrierbar ist und daß sie sowohl bei Leitungs-als auch bei Paketvermittlungen zu verwenden ist. Sie gestattet eine blockierungsfreie Vermittlung von PCM-Kanälen im Raum-und Zeitbereich.

Es folgt nun die Beschreibung der erfindungsgemäßen Schaltungsanordnung anhand der Figuren.

Die Figur 1 zeigt das Blockschaltbild eines Ausführungsbeispiels für die erfindungsgemäße Schaltungsanordnung gemäß Anspruch 2 und die Figur 5 in entsprechender Weise gemäß Anspruch 2.

In Figur 2 und in Figur 3 sind Ausgestaltungen der Erfindung wiedergegeben.

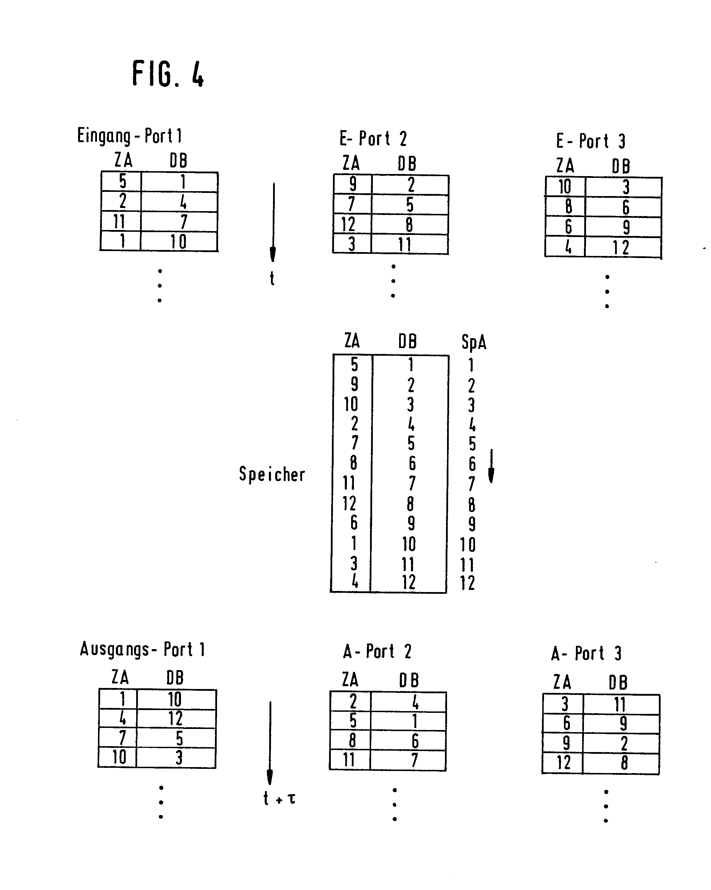

Gemäß Vorgabe des Anspruches 2 wird in Figur 4 die Vermittlung von 4 Datenblöcken demonstriert, die jeweils an 3 Eingangsports eingehen und an 3 Ausgangsports abgegeben werden.

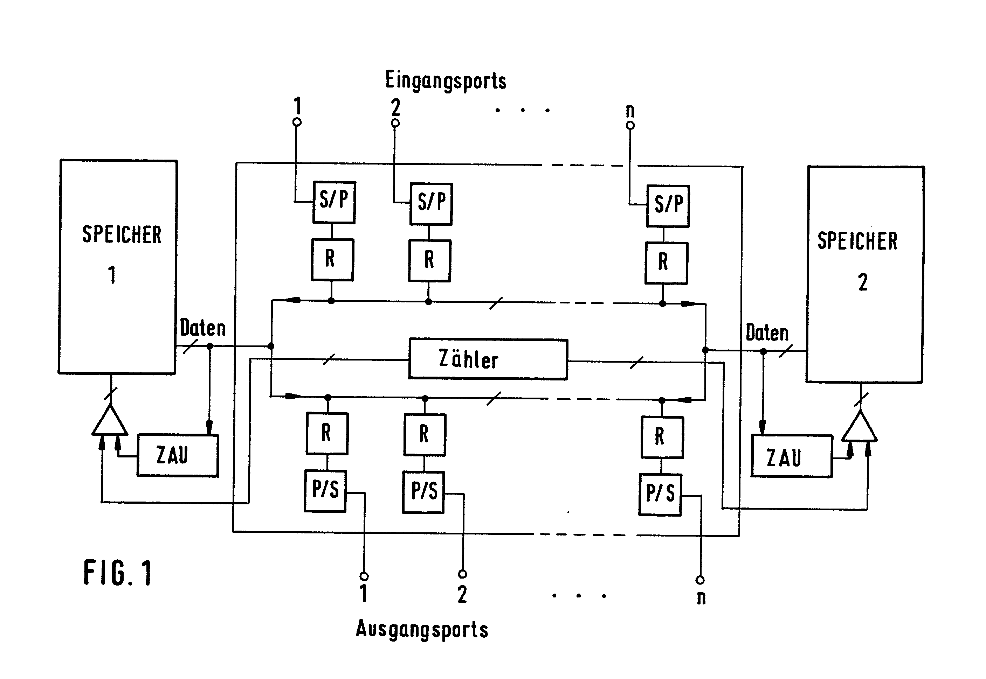

In Figur 1 sind die Eingangsports 1, 2 ... n der erfindungsgemäßen Vermittlungseinrichtung erkennbar, an welchen Eingangsports die seriell ankommenden zu vermittelnden Daten anstehen und anschließend in Serien-/Parallelwandlern S/P parallelgewandelt werden und danach in Registern R zwischengespeichert werden. Die zwischengespeicherten Datenblöcke werden nacheinander über eine Sammelleitung beispielsweise in einen linken Speicher 1 eingeschrieben und zwar unter einer Speicheradresse, die fortlaufend hochgezählt wird durch Inkrementbildung nach Anspruch 2.

Mittels eines Zählers, dessen einer Ausgang über ein Tristate-Torelement auf den Adreß-Eingang des Speichers 1 führt, wird die Adressierung der sequentiellen Einspeicherung der Datenblöcke in den Speicher gesteuert.

Über den anderen Eingang des Tristate-Torelements werden die Zieladressen auf den Adreß-Eingang des Speichers eingegeben. Diese Zieladressen können extern geliefert werden, beispielsweise über einen besonderen Signalisierungskanal oder über eine Rahmeninformation (Kopfinformation), oder intern über im Datenblock enthaltene Informationsbits. Zum Auslesen werden nacheinander in Abhängigkeit der einzelnen Zeitschlitze die entsprechend zugeordneten Zieladressen bzw. die den letzteren zugeordneten Speicheradressen aufgerufen und die dort liegenden Datenblöcke in die ebenfalls entsprechende zugeordneten Ausgangs-Schieberegister R aus-bzw. zwischengespeichert, um anschließend in nachfolgenden Parallel-/Serienwandlern P/S serialisiert zu werden, deren Ausgänge jeweils den entsprechenden Ausgangsports zugeordnet sind. Auf der rechten Seite der beschriebenen Anordnung ist ein weiterer Speicher 2 erkennbar, der auf dieselbe Weise wie der Speicher 1 mit den beiden Sammelleitungen sowie mit dem Zähler verbunden ist. Um einen kontinuierlichen Datenfluß zu ermöglichen, werden die Speicher 1 und 2 abwechselnd beschrieben bzw. gelesen. Dadurch, daß die Einspeicheradresse der Datenblöcke durch Inkrement gebildet werden kann, ist die Steuerung der erfindungsgemäßen Schaltungsanordnung durch einen modulo n-Zähler sehr aufwandsarm realisierbar, so daß kein Steuerspeicher benötigt wird.

Die Zieladresse ZA wird ebenfalls in unaufwendiger Weise in die entsprechende auszulesende Speicheradresse umgesetzt. Dies erfolgt in einem speicherfähigen Baustein ZAU, der über einen Anschluß zum Datenbus verfügt und somit die im Datenblock enthaltene Zieladresse extrahieren kann.

Die Anordnung ist aufgrund ihres modularen Aufbaus zu Systemen beliebiger Größe erweiterbar. Die Abtrennung der Zieladresse von den Informationsbits eines Datenblocks kann natürlich auch an anderer Stelle als der durch die Figur 1 angegebenen Stelle erfolgen, beispielsweise an den Ausgängen des Serien-/Parallelwandlers S/P.

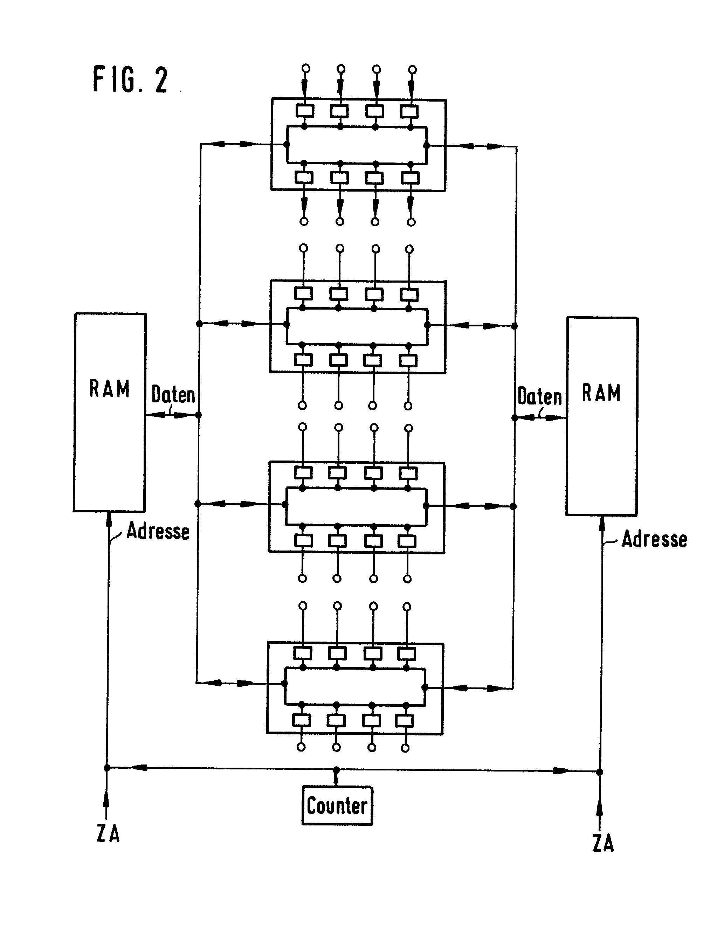

Eine praktische Realisierung zeigt die Figur 2, wobei ein System beispielsweise aus 12 Ports besteht, an denen jeweils TDM-Signale mit einer Rahmendauer von 1 ms anliegen. Jeder Rahmen besteht beispielsweise aus etwa 2.200 Sprachkanälen zu 64 Bit. Um die Zuverlässigkeit des Systems zu erhöhen, werden 4 Bausteine mit je 4 Eingangs- und 4 Ausgangsports verwendet. Erkennbar ist wiederum ein Doppelspeichersystem RAM, an dessen Datenein-bzw. -ausgang die Parallelein-bzw. -ausgangsschiene der 4 Bausteine zu einem Datenbus verbunden sind. Der Adreß-Eingang der beiden Speicher ist verbunden mit den Ausgängen des Zählers Counter sowie mit einem Zieladreßgeber ZA. Die beiden Speicher weisen beispielsweise eine Kapazität von etwa 1,7 MBit auf. Wie oben schon erwähnt, sind von den 4 identischen Bausteinen insgesamt 12 Ports aktiv, während die restlichen 4 Ports als Redundanz dienen.

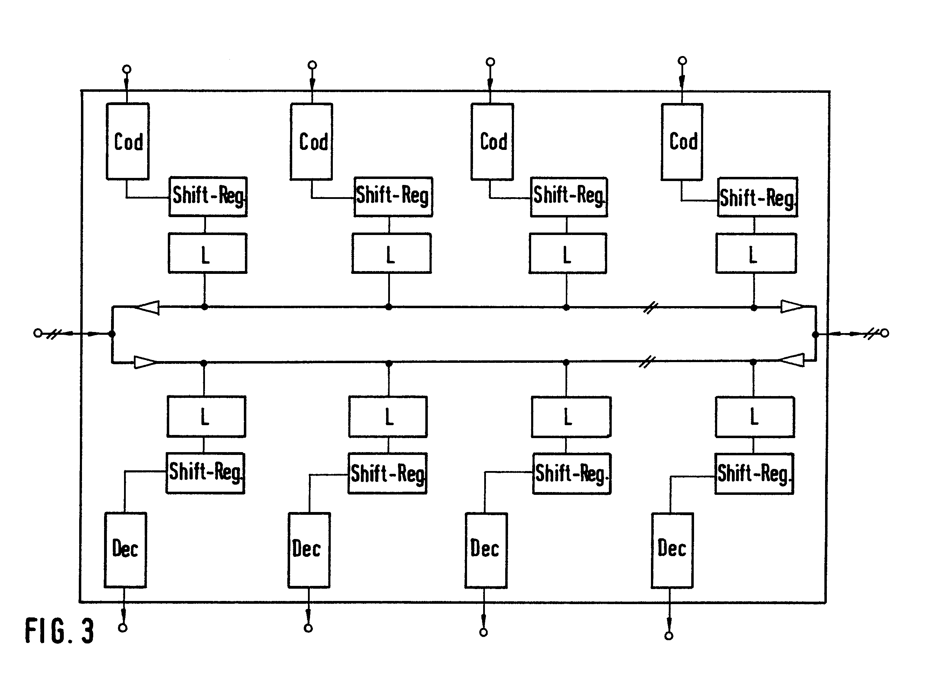

Die Figur 3 gibt ein detaillierteres Blockschaltbild eines Bausteins mit 4 Ein-/Ausgangsports wieder, wobei am Eingang jedes Ports ein Codierer Cod und vor dem Ausgang eines jeden Ausgangsports ein entsprechender Decodierer Dec eingeschleift ist, welcher Codierer einen fehlerkorrigierbaren bzw. korrigierenden Code erzeugt, so daß Einzelfehler korrigiert werden können. Die Serien-/Parallelwandlung bzw. Parallel-/Serienwandlung wird jeweils mit einem Schieberegister Shit-Reg realisiert, während die Register R nach Figur 1 jeweils durch ein Latch L ausgebildet sind.

In Figur 4 ist die Vermittlung von insgesamt 12 Datenblöcken DB, in denen die Zieladresse ZA enthalten ist, demonstriert, wobei jeweils 4 Datenblöcke DB an 3 Eingangs-Ports E-Ports eingehen und jeweils 4 Datenblöcke DB an 3 Ausgangs-Ports A-Ports abgehen. Die an den Eingangs-Ports eingehenden Datenblöcke sind numeriert von 1 bis 12; diese Nummern entsprechen beispielsweise der Reihenfolge des zeitlichen Eingangs, und in derselben Reihenfolge werden die Datenblöcke im Speicher unter der Speicheradresse SpA inkremental abgespeichert. Ausgelesen wird in Abhängigkeit von der Zieladresse ZA, jeweils links neben der Datenblock-Nummer DB stehend. Die Zuordnung ist dabei derart gewählt, daß jede 3. Zieladresse ZA = 1, 4, 7, 10 ... dem Ausgangs-Port 1, jede 3. Zieladresse ZA = 2, 5, 8, 11 ... dem Ausgangs-Port 2 und jede 3. Zieladresse ZA = 3, 6, 9, 12 ... dem Ausgangs-Port 3 zugeordnet sind. In entsprechender Weise werden nach einer Vermittlungszeit $\tau$ die Datenblöcke DB = 10, 12, 5, 3 ... in dieser Reihenfolge am Ausgangs-Port 1, die Datenblöcke DB = 4, 1, 6, 7 .. am Ausgangs-Port 2 und die Datenblöcke DB = 11 , 9, 2, 8 ... am Ausgangs-Port 3 gesendet.

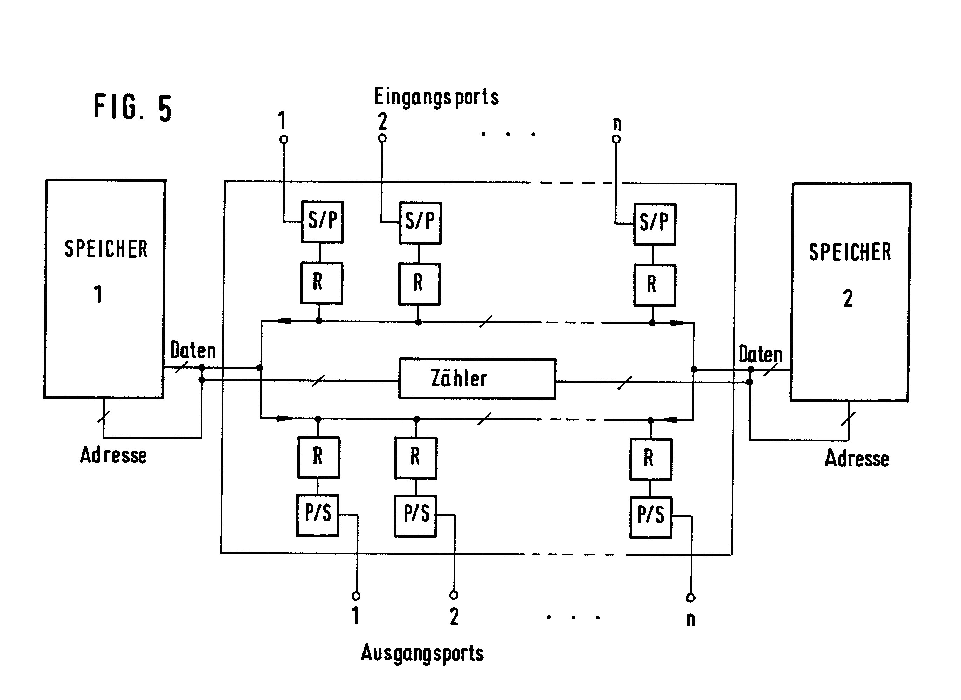

In Figur 5, die weitgehende Übereinstimmung mit Figur 1 aufweist, sind die Eingangsports 1, 2, ... n der erfindungsgemäßen Vermittlungseinrichtung erkennbar, an welchen Eingangsports die seriell ankommenden zu vermittelnden Daten anstehen und anschließend in Serien-/Parallelwandlern S/P parallelgewandelt werden und danach in Registern R zwischengespeichert werden. Die zwischengespeicherten Datenblöcke werden nacheinander über eine Sammelleitung beispielsweise in einen linken Speicher 1 eingeschrieben und zwar unter einer Speicheradresse, die gleichzeitig die Zieladresse ist, nämlich Ausgangsport und Zeitlage. Diese Zieladresse ist im Datenblock neben den Informationsbits enthalten, weshalb der Adresseneingang des Speichers 1 wie sein Dateneingang ebenfalls mit der Sammelleitung, die an sämtliche Ausgänge der Eingangsregister R führt, verbunden ist.

Mittels eines Zählers, dessen Ausgänge auf den Adreß-Eingang des Speichers 1 führt, wird die sequentielle Ausgabe der Datenblöcke an die einzelnen Ausgangsports 1 bis n gesteuert, wobei der Datenausgang des Speichers 1 über eine weitere Sammelleitung jeweils mit dem Eingang der n Ausgangsregister R verbunden ist, in welchen Ausgangsregistern R die vermittelten Daten zwischengespeichert werden, um anschließend in nachfolgenden Parallel-/Serienwandlern P/S serialisiert zu werden, deren Ausgänge jeweils den Ausgangsports zugeordnet sind. Auf der rechten Seite der beschriebenen Anordnung ist ein weiterer Speicher 2 erkennbar, der auf dieselbe Weise wie der Speicher 1 mit den beiden Sammelleitungen sowie mit dem Zähler verbunden ist. Um einen kontinuierlichen Datenfluß zu ermöglichen, werden die Speicher 1 und 2 abwechselnd beschrieben bzw. gelesen.

Dadurch, daß die Zieladresse der Datenblöcke gleichzeitig als Speicheradresse dient, wird die Steuerung der erfindungsgemäßen Schaltungsanordnung sehr aufwandsarm, so daß kein Steuerspeicher benötigt wird. Die Anordnung ist aufgrund ihres modularen Aufbaus zu Systemen beliebiger Größe erweiterbar.

Die Abtrennung der Zieladresse von den Informationsbits eines Datenblocks kann natürlich auch an anderer Stelle als der durch die Figur 5 angegebenen Stelle erfolgen, beispielsweise an den Ausgängen des Serien-/Parallelwandlers S/P.

**Ansprüche**

1. Schaltungsanordnung zur Vermittlung von PCM-Kanälen im Basisband, wobei die an n Eingangsports ankommenden seriellen zu vermittelnden Daten blockweise parallelgewandelt, in einem Speicher zwischengespeichert und nach dem Auslesen wieder serialisiert n Ausgangsports zugeführt werden, dadurch gekennzeichnet, daß eine erste Zwischenspeicherung der parallelisierten Datenblöcke in n den n Eingangsports zugeordneten Eingangsregistern R erfolgt, daß anschließend eine zweite Zwischenspeicherung in einem RAM-Speicher derart erfolgt, daß die Datenblöcke nacheinander unter einer Speicheradresse, die gleich der jeweiligen Zieladresse ist, eingeschrieben werden und daß die Datenblöcke nach Maßgabe der in der Zieladresse enthaltenen Nummer des Ausgangsports bzw. der Zeitlage sequentiell ausgelesen und wiederum in n Ausgangsregistern R zwischengespeichert werden, die jeweils den n Ausgangsports zugeordnet sind.

2. Schaltungsanordnung zur Vermittlung von PCM-Kanälen im Basisband, wobei die an n Eingangsports ankommenden seriellen zu vermittelnden Daten blockweise parallelgewandelt, in einem Speicher zwischengespeichert und nach dem Auslesen wieder serialisiert n Ausgangsports, die jeweils einer oder mehrerer Zieladressen zugeordnet sind, zugeführt werden, dadurch dadurch gekennzeichnet, daß eine erste Zwischenspeicherung der parallelisierten Datenblöcke in n den n Eingangsports zugeordneten Eingangsregistern R erfolgt, daß anschließend eine zweite Zwischenspeicherung in einem RAM-Speicher derart erfolgt, daß die Datenblöcke nacheinander entsprechend ihrer Eingangsreihenfolge unter einer Speicheradresse, die sequentiell hochgezählt wird (Inkrementbildung), eingeschrieben werden und daß die Datenblöcke nach Maßgabe der in der Zieladresse enthaltenen oder der Zieladresse zugeordneten Nummer des Ausgangsports bzw. der Zeitlage ausgelesen und wiederum in n Ausgangsregistern R zwischengespeichert werden, die jeweils den n Ausgangsports zugeordnet sind.

3. Schaltungsanordnung nach Anspruch 1 oder 2, dadurch gekennzeichnet, daß der RAM-Speicher in 2 Hälften (Speicher 1 und 2) aufgeteilt ist, die jeweils abwechselnd ausgelesen bzw. eingeschrieben werden.

4. Schaltungsanordnung nach Anspruch 1, 2 oder 3, dadurch gekennzeichnet, daß das sequentielle Einschreiben der Datenblöcke durch einen Zähler gesteuert wird.

5. Schaltungsanordnung nach einem der vorhergehenden Ansprüche, dadurch gekennzeichnet, daß die Zieladresse jeweils bei der Serien-/Parallelwandlung der ankommenden Datenblöcke oder bei der anschließenden ersten Zwischenspeicherung in den n Eingangsregistern R von den Informationsbits eines Datenblocks getrennt wird.

6. Schaltungsanordnung nach Anspruch 1, 2, 3 oder 4, dadurch gekennzeichnet, daß die Zieladresse extern geliefert wird, beispielsweise über Signalisierungskanal oder über Rahmeninformation (Kopf-Information).

7. Schaltungsanordnung nach einem der vorhergehenden Ansprüche, dadurch gekennzeichnet, daß die ankommenden seriellen Daten jeweils einer Codierung zur Erzeugung eines fehlerkorrigierbaren bzw. fehlerkorrigierenden Codes und die vermittelten abgehenden seriellen Daten jeweils einer entsprechenden Decodierung unterzogen werden.

8. Schaltungsanordnung nach einem der vorhergehenden Ansprüche, dadurch gekennzeichnet, daß die zu vermittelnden Daten jeweils als TDM-Signale mit einem Rahmen von etwa 2.200 Sprachkanälen zu je 64 Bit und mit einer Rahmendauer von 1 ms an einem Eingangsort anliegen.

9. Schaltungsanordnung nach einem der vorhergehenden Ansprüche, dadurch gekennzeichnet, daß Bausteine mit jeweils 4 Eingangsports und 4 Ausgangsports verwendet werden.

**Eingangsports**

1 2 ... n

SPEICHER 1

S/P S/P S/P

R R R

Daten

Zähler

R R R

ZAU

P/S P/S P/S

SPEICHER 2

Daten

ZAU

**FIG. 1**

1 2 ... n

**Ausgangsports**

0 269 803

FIG. 2

FIG. 3

# FIG. 4

**Eingang - Port 1**

| ZA | DB |
|----|----|
| 5  | 1  |
| 2  | 4  |
| 11 | 7  |
| 1  | 10 |

$\downarrow$ t

**E - Port 2**

| ZA | DB |
|----|----|
| 9  | 2  |
| 7  | 5  |
| 12 | 8  |
| 3  | 11 |

**E - Port 3**

| ZA | DB |
|----|----|
| 10 | 3  |
| 8  | 6  |
| 6  | 9  |
| 4  | 12 |

**Speicher**

| ZA | DB | SpA |
|----|----|-----|
| 5  | 1  | 1   |
| 9  | 2  | 2   |
| 10 | 3  | 3   |
| 2  | 4  | 4   |
| 7  | 5  | 5   |
| 8  | 6  | 6   |
| 11 | 7  | 7   |
| 12 | 8  | 8   |
| 6  | 9  | 9   |
| 1  | 10 | 10  |
| 3  | 11 | 11  |
| 4  | 12 | 12  |

**Ausgangs - Port 1**

| ZA | DB |
|----|----|
| 1  | 10 |
| 4  | 12 |
| 7  | 5  |
| 10 | 3  |

$t + \tau$

**A - Port 2**

| ZA | DB |
|----|----|
| 2  | 4  |
| 5  | 1  |
| 8  | 6  |
| 11 | 7  |

**A - Port 3**

| ZA | DB |
|----|----|
| 3  | 11 |
| 6  | 9  |
| 9  | 2  |
| 12 | 8  |

# FIG. 5

Eingangsports

SPEICHER 1

SPEICHER 2

Daten

Adresse

Daten

Adresse

Zähler

S/P  R  P/S

Ausgangsports

0 269 803